(19) Europäisches Patentamt
European Patent Office
Office européen des brevets

(11) EP 2 356 522 B1

(12) EUROPEAN PATENT SPECIFICATION

(45) Date of publication and mention
of the grant of the patent:
06.01.2016 Bulletin 2016/01

(51) Int Cl.:
G05B 5/00 (2006.01)        G05B 13/02 (2006.01)

(21) Application number: 09756409.0

(86) International application number:
PCT/DK2009/000236

(22) Date of filing: 16.11.2009

(87) International publication number:
WO 2010/054657 (20.05.2010 Gazette 2010/20)

(54) **REDUCING OSCILLATIONS IN A CONTROL SYSTEM**

VERRINGERUNG VON OSZILLATIONEN IN EINEM REGELSYSTEM

RÉDUCTION DES OSCILLATIONS DANS UN SYSTÈME DE COMMANDE

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 17.11.2008 DK 200801591

(43) Date of publication of application:
17.08.2011 Bulletin 2011/33

(73) Proprietor: Danfoss A/S
6430 Nordborg (DK)

(72) Inventors:
• PETROVCIC, Janko
SI-1472 Hotedrsica (SI)
• VRANCIC, Damir
SI-8000 Novo Mesto (SI)

(74) Representative: Copsey, Timothy Graham
Kilburn & Strode LLP
20 Red Lion Street
London WC1R 4PJ (GB)

(56) References cited:
EP-A2- 1 441 266    US-A- 3 465 768
US-A- 3 551 772     US-A1- 2005 004 685

• TINA MIAO, DALE E SEBORG: "Automatic
Detection of Excessively Oscillatory Feedback
Control Loops" PROCEEDINGS OF THE 1999
IEEE INTERNATIONAL CONFERENCE ON
CONTROL APPLICATIONS, vol. 1, 22 August 1999
(1999-08-22), - 27 August 1999 (1999-08-27) pages
359-364, XP010356408 Kohala Coast-Island of
Hawaii, Hawaii, USA DOI: 10.1109/CCA.
1999.806659

**Description**

**FIELD OF THE INVENTION**

The present invention relates to a method of performing control of a closed loop control system and a computer-readable medium having stored therein instructions for causing a processing unit to execute such a method and a control unit, e.g. an actuator, adapted to be used as part of a system controlled in a control system.

**BACKGROUND OF THE INVENTION**

The PID regulator is very common for the control of industrial processes and provides for proportional, integrating and derivative control. A process of larger scope employs a large number of such regulators. PID regulators are manufactured in large series as standard products. It is more and more common that the regulators are based on microcomputers, whereby more complicated control functions can be used.

Either because of inappropriate settings of the parameters in the PID regulator or because the characteristics of the process change, oscillations can occur in the control signal from the PID regulator to the controlled elements. These oscillations are undesired since they introduce wear out of the controlled elements, that are actuators and valves, in the system. Further, these oscillations introduce a control of the process, which is not optimal. US 2005/0004685 A1 adapts the controller gain if quick oscillations are detected.

**OBJECT AND SUMMARY OF THE INVENTION**

The object of the invention is to solve the above mentioned problems.

This is obtained by a method of performing control of a control system controlled by a controller, wherein said controller delivers the control input to at least one control unit in said system e.g. a valve, said method comprises the steps of:

- detecting the oscillation level in said control input to said control unit,
- amplifying said control input by a multiplication factor based on said detected oscillation level.

Thereby characteristics of the control unit are changed as oscillations are detected. Thereby oscillations are minimized, and e.g. the wear of the control units is reduced and service intervals are increased. Further by minimizing oscillations of the control unit the energy consumption of the control unit are lowered and an improved control is obtained.

The oscillation level is an indication of how much the input signal to the control unit oscillates. The oscillation level is an indication of control loop stability. A high oscillation level indicates a nearly unstable control system or that th system is very close to instability.

The control unit could e.g. be an actuator for a valve or a similar device.

The controller could e.g. be a PID controller, a PI controller or a P controller or another controller.

The control system could be a closed loop control system, but also other control systems are relevant.

In an embodiment said oscillation level is detected by calculating a decay ratio, wherein said decay ratio is used for determining said multiplication factor. Calculation of decay ratio is a special simple way of determining oscillation level.

In an embodiment a range of decay ratios is chosen as the optimal decay ratio resulting in a multiplication factor of 1.

In an embodiment a decay ratio lower than said optimal decay ratio results in a multiplication factor more than 1. This can improve control performance if e.g. a closed-loop response is too slow

In an embodiment a decay ratio higher than said optimal decay ratio results in a multiplication factor less than 1. This can reduce overshoots and oscillatory behavior of the control unit in the closed-loop configuration.

In an embodiment the method further comprises the step of determining the amplification of the control input for the entire working range of said control unit based on said determined multiplication factor.

In an embodiment said method of determining the amplification of the entire working range comprises the steps of:

- determining the amplification value for at least three predefined working points representing said entire working range,
- interpolating said amplification values.

In an embodiment the amplification of said control input has to be between a maximum and a minimum preset amplification. Otherwise permanent periodic disturbance might decrease control input amplification toward zero.

The invention further relates to a computer-readable medium having stored therein instructions for causing a processing unit to execute a method according to the above.

The invention further relates to an actuator such as a valve adapted to be used as part of a system controlled in a control system by a controller, wherein said controller delivers the control input to said control unit, said unit comprises:

- means for detecting the oscillation level in said control input from said controller,
- means for amplifying said control input by a multiplication factor based on said detected oscillation level.

The invention further relates to a control system comprising a control unit according to any of the claims 10-12.

## BRIEF DESCRIPTION OF THE DRAWINGS

In the following, preferred embodiments of the invention will be described referring to the figures, where

figure 1 illustrates a control loop and the steps comprised in the method of controlling according to the present invention,

figure 2 illustrates an example of dependency between measured decay ratio and multiplication factor,

figure 3 illustrates a control loop and an embodiment of further steps comprised in the method of controlling according to the present invention,

figure 4a illustrates the amplification of a control unit being a valve interpolated between three working points,

figure 4b illustrates a relationship between gain reduction and valveinput,

figure 5 illustrates the change of the amplification in the three working points illustrated above after oscillations have been detected,

figure 6 illustrates a method of detecting oscillations in the control input.

## DESCRIPTION OF EMBODIMENTS

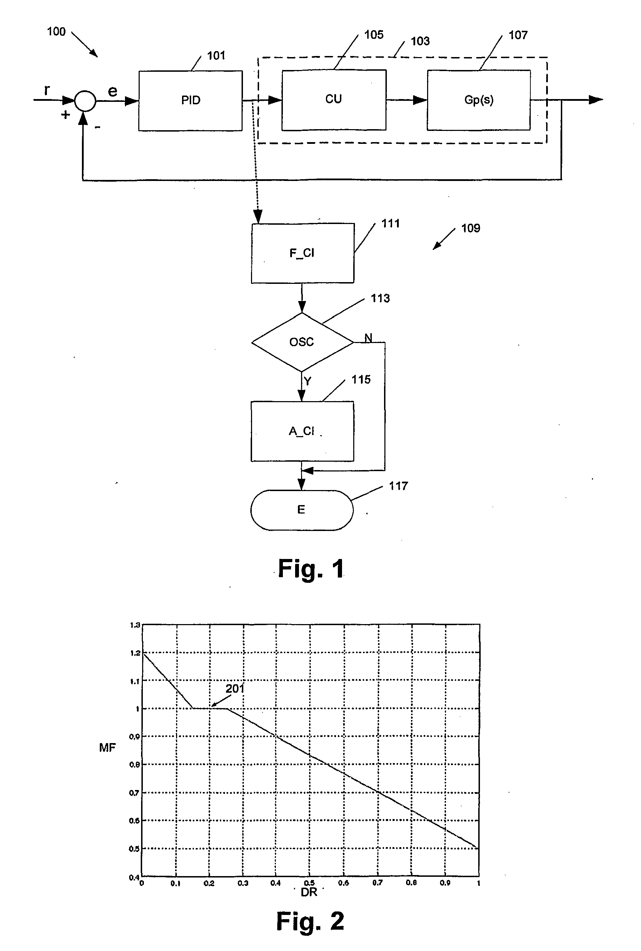

In figure 1 a closed loop control system 100 is illustrated. The system comprises a PID controller 101 receiving the control error e as input, where the control error has been calculated by subtracting the process output from a reference r. Based on the control error, the PID controller calculates a controller output given to the system 103 as control input. The control input is given to a control unit (CU) 105 from which the system can be influenced, e.g. an actuator for a valve or the like. The control unit responds to the control input and influences the process Gp(s). If the control unit is an actuator for a valve, it responds by changing how open or closed the valve is.

According to the present invention, instead .of using the output of the controller 101 as control input to the control unit 105, the control input is being processed as illustrated in the flow diagram 109. Here the control input is low pass filtered in 111 (F CI), then in 113 (OSC) it is detected whether there are oscillations in the control input. If oscillations are present, then in 115 the control input is amplified (A CI) with a multiplication factor typically less than 1 in order to dampen the control input to the control unit. If no oscillations are detected, the algorithm is ended in 117 (E). The algorithm as described could be performed each time the general control program for controlling the process is executed, e.g. each time, whereby oscillations are detected as they occur as an integrated part of determining the control input to the control unit.

Further to the presence of oscillations being detected, also the degree of oscillations is determined and used for determining the value of the multiplication factor.

The decay ratio of the oscillations is calculated as:

$$\text{Decay ratio (DR)} = (\text{peak1} - \text{peak2}) / (\text{peak3} - \text{peak4}),$$

where peak1 is the last peak and peak 4 is the first detected peak.

High values of decay ratio means that the system is very oscillating and close to instability. The values more than 1 denote an unstable system.

In figure 2 an example of dependency between calculated decay ratio DR and multiplication factor MF is illustrated. For optimal value of decay ratio the range from 0.15 to 0.25 is chosen 201, and if the measured decay ratio DR is in this range, the multiplication factor is 1 and the control input will not be changed.

If a smaller decay ratio is determined, the damping of the control input is too high, and the multiplication factor is more than 1 in order to increase control input to the control unit. As the decay ratio is getting smaller than 0.15, the multiplication factor is linearly increasing.

Further, if a higher decay ratio is determined, the damping of the control input is too low, and the multiplication factor is less than 1 in order to decrease control input to the control unit. As the decay ratio is getting larger than 0.25, the multiplication factor is linearly decreasing.

Note that the interval 0.15 - 0.25 is just an example where tests have shown successful results (good tracking and disturbance rejection properties), but other intervals having another size and position could be chosen depending on the control system and the characteristics of the control unit. Further, the multiplication factor needs not be linearly decreasing and increasing around the interval - the main importance is that oscillations are damped via a multiplication factor less than 1, and too much damping is amplified via a multiplication factor more than 1.

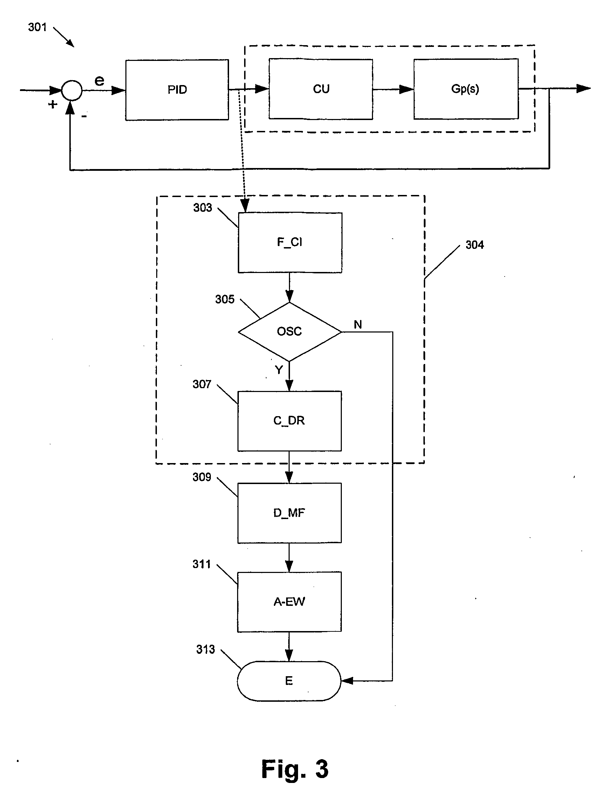

In figure 3 a control loop is illustrated 301 similar to the one in figure 1 and where further steps are comprised in the method of controlling. The oscillation detection is performed in 304 and consists of the control input being low pass filtered in 303 (F_CI) in order to remove high frequency noise. Further in 305 (OSC) it is detected whether there are oscillations in the control input. If oscillations are present, then in 307 the decay ratio is calculated (C_DR) as described above.

In 309, based on the calculated decay ratio, the corresponding multiplication factor is determined (D_MF), and the control input is amplified with the multiplication factor. Finally, in 311 the amplification of the control input for the entire working range (A_EW) is calculated and used. If no oscillations are detected, the algorithm is ended in 313 (E). The algorithm as described could be performed each time the general control program for controlling the process is executed, e.g. each time, whereby oscillations are detected as they occur as an integrated part of determining the control input to the control unit.

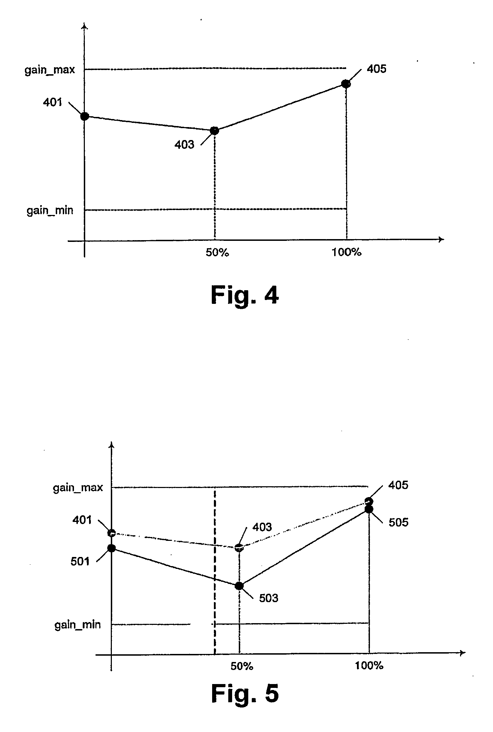

In figure 4 an example is given of the step 311 in figure 3 where the control unit is a valve. The working range of the valve is represented with three points 401, 403, 405 - these points represent amplification of the valve at 0%, 50% and 100% openness of the valve. Amplification can never be higher or lower than preset value (parameter gain_max (e.g. value 1) and gain_min (eg. value 0.2)). Further, the value of amplification in the range 0% to 50% and in the range 50% to 100% is determined by interpolating the three points representing the working range.

The reduction of gain can e.g. be calculated in selected points (e.g. o%, 50% and 100%) by using the following function:

$$g=1 - (1-k)./(1 + 10*(v-c).*(v-c)),$$

where g is gain reduction at different values of valve input signal (v), c is a particular valve input signal at which oscillations occur, and k is the gain reduction for oscillations in the point c.

In figure 5 the relationship between v and g is illustrated in an example where oscillations have been detected near 40%. Here v is the valve input in the range 0 to 1 and g is the gain reduction for oscillation detected in c = 0.4 and with central reduction k=0.5.

An example of control according to the present invention is that if calculations show that a reduction of the amplification of a factor 0.5 is needed, then amplification is reduced in all three points, but not in the same degree for all points. Amplification is reduced most in the point nearest the point where the oscillations appeared and least in the point most distant to the point of the oscillation. Algorithms for calculating the reductions for each point could in an embodiment be algorithms similar to the ones used in fuzzy control systems.

In figure 5 the change of the amplification in the three working points is illustrated, where after oscillations have been detected near 40% of openness of the valve. Amplification is reduced by suitably changing the three points representing the working range. Most changed is the point near the range where oscillations appeared (50%) and the least changed point is the most distant point (100%). The working range after this change is then represented with three points 501, 503, 505. These points represent amplification of the valve at 0%, 50% and 100% openness of valve. Again the value of amplification in the range 0% to 50% and in the range 50% to 100% is determined by interpolating the three points representing the working range.

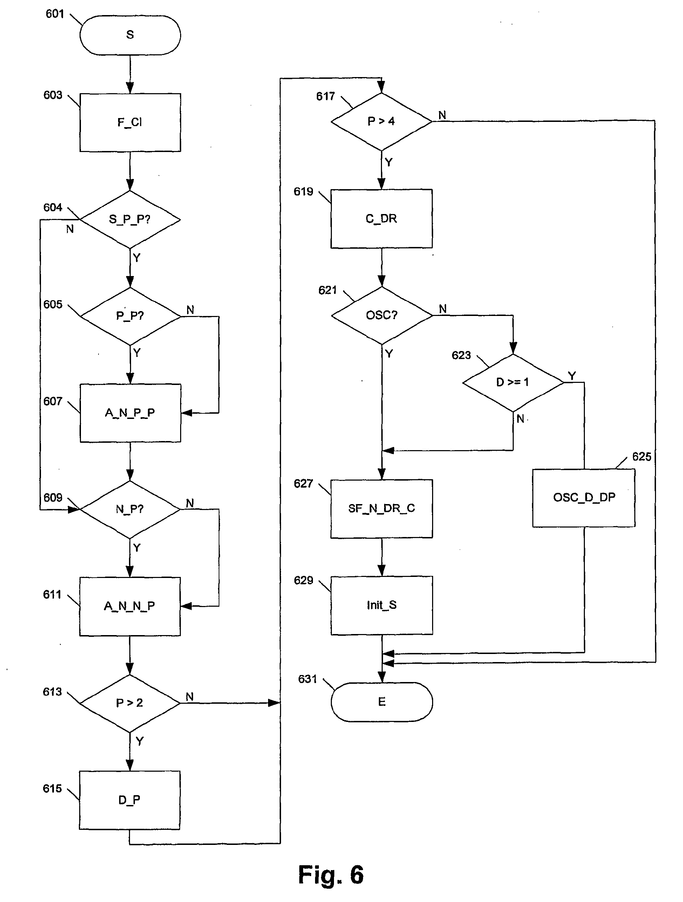

In figure 6 the oscillation detector, illustrated as 304 in figure 3, is further described Initially, in 601 the algorithm is started. In 603 the input signal is filtered (F_CI) and in 604 it is determined whether the routine shall search for a negative or a positive peak (S_P_P), this depends on which peak where detected previously and if it is the first iteration the algorithm starts searching for a positive peak. In an alternative embodiment the routine could also start by searching for a negative peak.

In 605, if a positive peak is confirmed (P_P?) (a positive peak is confirmed if the signal is less than a maximum detected value minus hysteresis), the peak is counted in 607 by adding to a counter a new positive peak (A_N_P_P).

In 609, if a negative peak is confirmed (N_P?) (a negative peak is confirmed if the signal is more than a minimum detected value plus hysteresis), the negative peak is counted in 611 by adding to a counter a new negative peak (A_N_N_P).

In 613, if more than 2 peaks have been detected (P > 2), then in 615 the first peak is disregarded and detection of other peeks (oscillation detection) is initiated, the first peak is deleted in order to avoid oscillations invoked by changing set point, if this is not deleted the later calculated decay ratio might be inaccurate. In 617 if a sufficient number of peaks (e.g. 4 (P > 4)) is detected the decay ratio is calculated in 619 (C_DR) e.g. as described previosly. If in 621 it is determined that oscillations have already been detected, then in 627 a flag is set that a new decay ratio is calculated (SF_N_DR_C), and in 629 all parameters are initialized and a new search is started (Init_S).

If in 621 oscillations have not been detected yet, then in 623 it is determined whether the decay ratio is very high (1 or more) (D>=1) meaning that serious oscillations is present and this might be because of an instable loop or disturbance occuring when searching for peaks, and if this is the case then in 625 it is determined that oscillations are detected and one peak is discarded (OSC_D_DP) this is in order to ensure that the decay ratio really is above 1, whereby one more peak will be searched for.

In 631 the algorithm is ended (E).

## Claims

1. A method of controlling a control system (103) being controlled by a controller (101), wherein said controller (101) delivers the control input to at least one control unit (105) in said system, e.g. a valve, said method comprises the steps of:

   - detecting the oscillation level (113) in said control input to said control unit,
   - amplifying (115) said control input by a multiplication factor based on said detected oscillation level,

   **characterized by**,
   said oscillation level is detected by calculating a decay ratio based on detected peaks and where said decay ratio is used for determining said multiplication factor, and where the amplified (115) control input is used as the control input to the at least one control unit (105)

2. A method according to claim 1, wherein a range of decay ratios is chosen as the optimal decay ratio range (201) resulting in a multiplication factor of 1, and where a decay ratio lower than said optimal decay ratio range (201) results in a multiplication factor more than 1 in an increasing relationship to a decreasing multiplication factor, and a decay ratio higher than said optimal decay ratio range (201) results in a multiplication factor less than 1 in an decreasing relationship to an increasing multiplication factor.

3. A method according to claim 2, wherein said relationship is linearly increasing and decreasing in relation to said multiplication factor.

4. A method according to claim 2 or 3, wherein the optimal decay ratio range (201) is the interval 0.15-0.25.

5. A method according to any of the claims 1-4, wherein the method further comprises the step of determining the amplification of the control input for the entire working range of said control unit, and wherein said method comprises the steps of:

   - determining the amplification value for at least three predefined working points representing said entire working range,
   - interpolating said amplification values for the values of amplification in the working ranges between said at least three predefined working points.

6. A method according to claim 5, wherein amplification is reduced most in the point nearest the point where the oscillations appeared and least in the point most distant to the point of the oscillation.

7. A method according to any of the claims 1-6, wherein the amplification of said control input has to be between a maximum and minimum preset amplification.

8. A control system (100, 301) comprising a control unit (105) e.g. an actuator such as a valve adapted to be used as part of a system controlled in a control system (103) by a controller (101), wherein said controller (101) delivers the control input to said control unit (105), said unit comprises:

- means (109, 113) for detecting the oscillation level in said control input from said controller (101) by calculating a decay ratio based on detected peaks and where said decay ratio is used for determining said multiplication factor,
- means for amplifying (109, 115) said control input by the multiplication factor based on said detected oscillation level,

and where the amplified (115) control input is used as the control input to the control unit (105).

9. The control system (100, 301) of claim 8, wherein said control system (100, 301) is adapted to operate by the method according to any of the claims 1-7.


**Patentansprüche**

1. Verfahren zum Regeln eines Regelsystems (103), das von einer Regelvorrichtung (101) geregelt wird, wobei die Regelvorrichtung (101) den Regeleingang zu mindestens einer Regeleinheit (105) in dem System, z. B. einem Ventil, liefert, wobei das Verfahren folgende Schritte umfasst:

- Detektieren des Oszillationspegels (113) in dem Regeleingang in die Regeleinheit,
- Verstärken (115) des Regeleingangs um einen Multiplikationsfaktor auf der Basis des detektierten Oszillationspegels,

**dadurch gekennzeichnet, dass**
der Oszillationspegel durch Berechnen eines Ausschwingverhältnisses auf der Basis detektierter Spitzen detektiert wird und wobei das Ausschwingverhältnis zum Ermitteln des Multiplikationsfaktors verwendet wird und wobei der verstärkte (115) Regeleingang als Regeleingang in die mindestens eine Regeleinheit (105) verwendet wird.

2. Verfahren nach Anspruch 1, wobei ein Bereich von Ausschwingverhältnissen als optimaler Ausschwingverhältnisbereich (201) gewählt wird, was zu einem Multiplikationsfaktor von 1 führt, und wobei ein Ausschwingverhältnis, das kleiner ist als der optimale Ausschwingverhältnisbereich (201), zu einem Multiplikationsfaktor von größer als 1 in einer sich vergrößernden Beziehung zu einem sich verkleinernden Multiplikationsfaktor führt und ein Ausschwingverhältnis, das größer ist als der optimale Ausschwingverhältnisbereich (201) zu einem Multiplikationsfaktor von kleiner als 1 in einer sich verkleinernden Beziehung zu einem sich vergrößernden Multiplikationsfaktor führt.

3. Verfahren nach Anspruch 2, wobei sich die Beziehung in Bezug auf den Multiplikationsfaktor linear vergrößert und verkleinert.

4. Verfahren nach Anspruch 2 oder 3, wobei der optimale Ausschwingverhältnisbereich (201) das Intervall von 0,15-0,25 ist.

5. Verfahren nach einem der Ansprüche 1-4, wobei das Verfahren ferner den Schritt des Ermittelns der Verstärkung des Regeleingangs für den gesamten Arbeitsbereich der Regeleinheit umfasst und wobei das Verfahren die folgenden Schritte umfasst:

- Ermitteln des Verstärkungswerts für mindestens drei vordefinierte Arbeitspunkte, die den gesamten Arbeitsbereich darstellen,
- Interpolieren der Verstärkungswerte für die Werte der Verstärkung in den Arbeitsbereichen zwischen den mindestens drei vordefinierten Arbeitspunkten.

6. Verfahren nach Anspruch 5, wobei die Verstärkung in dem Punkt am stärksten verringert wird, an dem die Oszillationen aufgetreten sind, und am wenigsten in dem Punkt, der von dem Punkt der Oszillation am weitesten entfernt ist.

**7.** Verfahren nach einem der Ansprüche 1-6, wobei die Verstärkung des Regeleingangs zwischen einer maximalen und einer minimalen voreingestellten Verstärkung liegen muss.

**8.** Regelsystem (100, 301), das eine Regeleinheit (105), z. B. ein Stellglied, wie z. B. ein Ventil, umfasst, welches so ausgelegt ist, dass es als Teil eines Systems verwendet wird, das in einem Regelsystem (103) von einer Regelvorrichtung (101) geregelt wird, wobei die Regelvorrichtung (101) den Regeleingang zu der Regeleinheit (105) liefert, wobei die Einheit umfasst:

- eine Einrichtung (109, 113) zum Detektieren des Oszillationspegels in dem Regeleingang aus der Regelvorrichtung (101) durch Berechnen eines Ausschwingverhältnisses auf der Basis von detektierten Spitzen und wobei das Ausschwingverhältnis zum Ermitteln des Multiplikationsfaktors verwendet wird,
- eine Einrichtung zum Verstärken (109, 115) des Regeleingangs um den Multiplikationsfaktor auf der Basis des detektierten Oszillationspegels,

und wobei der verstärkte (115) Regeleingang als Regeleingang in die Regeleinheit (105) verwendet wird.

**9.** Regelsystem (100, 301) nach Anspruch 8, wobei das Regelsystem (100, 301) so ausgelegt ist, dass es anhand des Verfahrens nach einem der Ansprüche 1-7 arbeitet.

## Revendications

**1.** Procédé de commande d'un système de commande (103) commandé par un module de commande (101), lequel module de commande (101) applique l'entrée de commande à au moins une unité de commande (105) dans ledit système, par ex. à une soupape, ledit procédé comprenant les étapes consistant à :

- détecter le niveau d'oscillations (113) dans ladite entrée de commande appliquée à ladite unité de commande,
- amplifier (115) ladite entrée de commande par un facteur de multiplication basé sur ledit niveau d'oscillations détecté,

le procédé étant **caractérisé en ce que**,
ledit niveau d'oscillations est détecté en calculant un rapport d'amortissement basé sur des pics détectés, ledit rapport d'amortissement servant à déterminer ledit facteur de multiplication, et l'entrée de commande amplifiée (115) servant d'entrée de commande appliquée à ladite au moins une unité de commande (105).

**2.** Procédé selon la revendication 1, dans lequel une plage de rapports d'amortissement est choisie comme la plage optimale de rapports d'amortissement (201) qui donne lieu à un facteur de multiplication de 1, et dans lequel un rapport d'amortissement plus bas que ladite plage optimale de rapports d'amortissement (201) donne lieu à un facteur de multiplication supérieur à 1 selon une relation croissante relativement à un facteur de multiplication décroissant, et un rapport d'amortissement plus élevé que ladite plage optimale de rapports d'amortissement (201) donne lieu à un facteur de multiplication inférieur à 1 selon une relation décroissante relativement à un facteur de multiplication croissant.

**3.** Procédé selon la revendication 2, dans lequel ladite relation est linéairement croissante et décroissante relativement audit facteur de multiplication.

**4.** Procédé selon la revendication 2 ou 3, dans lequel la plage optimale de rapports d'amortissement (201) correspond à l'intervalle 0,15-0,25.

**5.** Procédé selon l'une quelconque des revendications 1 à 4, lequel procédé comprend en outre l'étape consistant à déterminer l'amplification de l'entrée de commande pour la plage de fonctionnement tout entière de ladite unité de commande, et lequel procédé comprend en outre les étapes consistant à :

- déterminer la valeur d'amplification pour au moins trois points de fonctionnement prédéfinis représentant ladite plage de fonctionnement tout entière,
- interpoler lesdites valeurs d'amplification pour les valeurs d'amplification dans les plages de fonctionnement situées entre lesdits au moins trois points de fonctionnement prédéfinis.

**6.** Procédé selon la revendication 5, dans lequel l'amplification est la plus réduite au point le plus proche du point d'apparition des oscillations et la moins réduite au point le plus éloigné du point de l'oscillation.

**7.** Procédé selon l'une quelconque des revendications 1 à 6, dans lequel l'amplification de ladite entrée de commande doit s'inscrire entre des amplifications minimale et maximale préétablies.

**8.** Système de commande (100, 301) comprenant une unité de commande (105), par ex. un actionneur tel qu'une soupape, adaptée à être utilisée au sein d'un système commandé dans un système de commande (103) par un module de commande (101), lequel module de commande (101) applique l'entrée de commande à ladite unité de commande (105), ladite unité comprenant :

- des moyens (109, 113) de détection du niveau d'oscillations dans ladite entrée de commande issue dudit module de commande (101) par calcul d'un rapport d'amortissement basé sur des pics détectés, ledit rapport d'amortissement servant à déterminer ledit facteur de multiplication,
- des moyens d'amplification (109, 115) de ladite entrée de commande par le facteur de multiplication basé sur ledit niveau d'oscillations détecté, et

l'entrée de commande amplifiée (115) servant d'entrée de commande appliquée à l'unité de commande (105).

**9.** Système de commande (100, 301) selon la revendication 8, lequel système de commande (100, 301) est adapté à fonctionner conformément au procédé selon l'une quelconque des revendications 1 à 7.

**Fig. 1**

**Fig. 2**

**Fig. 3**

**Fig. 4**

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050004685 A1